(19) Europäisches Patentamt
European Patent Office
Office européen des brevets

(11) **EP 4 773 353 A1**

(12) **EUROPEAN PATENT APPLICATION**
published in accordance with Art. 153(4) EPC

(43) Date of publication:
**08.07.2026 Bulletin 2026/28**

(21) Application number: 23959887.3

(22) Date of filing: **30.11.2023**

(51) International Patent Classification (IPC):
***H01M 50/103*** (2021.01)

(52) Cooperative Patent Classification (CPC):
**H01M 50/103; Y02E 60/10**

(86) International application number:
**PCT/CN2023/135632**

(87) International publication number:
**WO 2025/111974 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **CHEN, Xinxiang
Ningde, Fujian 352100 (CN)**

• **LIN, Denghua
Ningde, Fujian 352100 (CN)**
• **HUANG, Shoujun
Ningde, Fujian 352100 (CN)**
• **ZHENG, Yulian
Ningde, Fujian 352100 (CN)**
• **WANG, Peng
Ningde, Fujian 352100 (CN)**
• **JIN, Haizu
Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **BATTERY CELL, BATTERY, ELECTRIC APPARATUS, AND ENERGY STORAGE DEVICE**

(57) Provided in the embodiments of the present application are a battery cell, a battery, an electric apparatus, and an energy storage device. The battery cell comprises a casing and an electrode assembly, wherein the casing comprises a casing body and an end cap, the casing body being provided with an opening and comprising a first wall, the first wall comprising a first opening portion and a first body portion, which are distributed in sequence in a first direction, the first direction being parallel to the thickness direction of the end cap, the first body portion being far away from the opening relative to the first opening portion, and the end cap being connected to the first opening portion and sealing the opening; and the electrode assembly is arranged in the casing body and comprises a negative electrode sheet, the negative electrode sheet comprising a negative electrode active material, the negative electrode active material comprising a silicon-based material, and the maximum thickness of the first opening portion being greater than the thickness of the first body portion. On the basis of the technical solution provided in the embodiments of the present application, the reliability of the battery can be improved.

FIG. 5

**Description**

TECHNICAL FIELD

The present application relates to the field of battery technologies, and in particular, to a battery cell, a battery, an electric apparatus, and an energy storage device.

BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, a battery technology is an important factor for the development thereof.

In the process of manufacturing batteries, the reliability of a battery is an issue that cannot be ignored. Therefore, how to improve the reliability of the battery is a technical problem that urgently needs to be solved in battery technologies.

SUMMARY

The present application provides a battery cell, a battery, an electric apparatus, and an energy storage device, which can improve the reliability of the battery.

The present application is implemented through the following technical solutions:

According to a first aspect, an embodiment of the present application provides a battery cell, comprising a casing and an electrode assembly. The casing comprises a casing body and an end cap. The casing body is provided with an opening and comprises a first wall. The first wall comprises a first opening portion and a first body portion which are distributed in sequence in a first direction. The first direction is parallel to a thickness direction of the end cap. The first body portion is far away from the opening relative to the first opening portion. The end cap is connected to the first opening portion and seals the opening. The electrode assembly is arranged in the casing body and comprises a negative sheet. The negative sheet comprises a negative active material. The negative active material comprises a silicon-based material. The maximum thickness of the first opening portion is greater than the thickness of the first body portion.

According to the battery cell of the embodiment of the present application, the negative material comprises a silicon-based material. In a battery cell of a silicon-containing chemical system, the battery cell has a relatively high energy density. An opening of the first wall is thickened, so that the maximum thickness of the first opening portion is greater than the thickness of the first body portion, which can enhance the strength of the first opening portion, reduce the risk of cracking of the casing body near a welding region between the casing body and the end cap, and improve the reliability of the battery cell.

According to some embodiments of the present application, a mass ratio of the silicon-based material in the negative active material is a, the maximum thickness of the first opening portion is b1, the thickness of the first body portion is b2, b=(b1-b2)/b2, and a and b satisfy at least one of the following conditions:

$$(1) \ 0.2 \leq b/a \leq 10;$$

$$(2) \ 3\% \leq a \leq 100\%;$$

and

$$(3) \ 0.1 \leq b \leq 0.5$$

In the above solution, the mass ratio of the silicon-based material in the negative active material, the maximum thickness of the first opening portion, and the thickness of the first body portion satisfy the above relationship, which not only satisfies that the first opening portion has high strength, but also enables the battery cell to have a high energy density.

According to some embodiments of the present application, a and b satisfy at least one of the following conditions:

$$(1) \ 0.4 \leq b/a \leq 6;$$

$$(2) \ 5\% \leq a \leq 30\%,$$

and

$$(3) \ 0.12 \leq b \leq 0.3.$$

In the above solution, compared with 0.2≤b/a≤10, 3%≤a≤100%, and 0.1≤b≤0.5, when 0.4≤b/a≤ 6, 5%≤a≤30%, and 0.12≤b≤0.3, the battery cell can have a higher energy density, the casing body is subjected to a smaller expansion force, and the first opening portion has higher strength, thereby reducing the risk of cracking of the casing body near the welding region between the casing body and the end cap.

According to some embodiments of the present application, the first opening portion comprises a first section and a second section that are connected to each other, the first section, the second section, and the first body portion being distributed in sequence in the first direction, the maximum thickness of the second section being greater than the thickness of the first body portion, the maximum thickness of the second section being greater than the maximum thickness of the first section, and the end cap being connected to the first section.

In the above solution, the first section, the second section, and the first body portion are distributed in sequence in the first direction, and the end cap is connected to the first section, so that the second section is immediately adjacent to the connection between the end cap and the first section. The maximum thickness of the second section is greater than the thickness of the first body portion, and the maximum thickness of the second section is greater than the maximum thickness of the first section, so that the first opening portion has high strength, which can reduce the risk of cracking of the first wall near a welding region between the first wall and the end cap, and improve the service life and reliability of the battery cell.

According to some embodiments of the present application, a first step surface is formed between the second section and the first section, and the end cap is overlapped with the first step surface.

In the above solution, the provision of the first step surface can realize the positioning of the end cap and facilitate the assembly of the end cap and the casing body.

According to some embodiments of the present application, the casing body further comprises a second wall arranged adjacent to the first wall, the second wall being connected to the end cap, and an area of an outer surface of the first wall being greater than an area of an outer surface of the second wall and being greater than an area of an outer surface of the end cap.

In the above solution, the first wall may be a large surface of the battery cell. During thermal runaway of the battery cell, large gas production, or charge and discharge cycles of the battery cell, the first wall is subjected to a large force, and an opening of the first wall is thickened, which can effectively reduce the risk of cracking of the casing body near the welding region between the casing body and the end cap.

According to some embodiments of the present application, the second wall comprises a second opening portion and a second body portion distributed in sequence in the first direction, the second body portion being far away from the opening relative to the second opening portion, and the maximum thickness of the second opening portion being greater than the thickness of the second body portion.

In the above solution, the maximum thickness of the second opening portion is greater than the thickness of the second body portion. The second opening portion is thickened compared to the second body portion, so that the second opening portion has stronger strength, which can reduce the risk of cracking of the casing body near the welding region between the casing body and the end cap.

According to some embodiments of the present application, the second opening portion comprises a third section and a fourth section that are connected to each other, the third section, the fourth section, and the second body portion being distributed in sequence in the first direction, the maximum thickness of the fourth section being greater than the thickness of the second body portion, the maximum thickness of the fourth section being greater than the maximum thickness of the third section, a second step surface being formed between the fourth section and the third section, and the end cap being overlapped with the second step surface and connected to the third section.

In the above solution, the third section, the fourth section, and the second body portion are distributed in sequence in the first direction, and the end cap is connected to the third section, so that the fourth section is immediately adjacent to the connection between the end cap and the third section. The maximum thickness of the fourth section is greater than the thickness of the second body portion, and the maximum thickness of the fourth section is greater than the maximum thickness of the third section, so that the second opening portion has high strength, which can reduce the risk of cracking of the casing body near the welding region between the casing body and the end cap, and improve the service life and reliability of the battery cell. The end cap is overlapped with the second step surface, which facilitates the positioning of the end cap.

According to some embodiments of the present application, the maximum thickness of the first opening portion is b1, the thickness of the first body portion is b2, which satisfies $0.1 \leq b \leq 0.5$, $b=(b1-b2)/b2$, and $0.35$ mm $\leq b2 \leq 0.8$ mm.

In the above solution, b1 and b2 satisfy the above relationship. The first opening portion has both strong strength and a low processing and manufacturing difficulty, which facilitates the processing and manufacturing of the casing body.

According to some embodiments of the present application, $0.12 \leq b \leq 0.3$, and $0.4$ mm $\leq b2 \leq .6$ mm.

In the above solution, compared with $0.1 \leq b \leq 0.5$ and $0.35$ mm $\leq b2 \leq 0.8$ mm, when $0.12 \leq b \leq 0.3$ and $0.4$ mm $\leq b2 \leq 0.6$ mm, in a case where the first opening portion has stronger strength, the first opening portion has a lower processing and manufacturing difficulty.

In some embodiments of the present application, the material of the casing body is aluminum or an aluminum alloy.

In the above solution, the material of the casing body is aluminum or an aluminum alloy, which is low in cost.

According to some embodiments of the present application, the casing body is of a prismatic structure with openings at both ends, and there is provided two end caps which are respectively connected to two first opening portions and seal the corresponding openings.

In the above solution, openings are respectively provided at the two ends of the casing body. Both openings are thickened to reduce the risk of cracking of the casing body near the welding region between the casing body and the end cap.

According to a second aspect, an embodiment of the present application provides a battery, comprising the battery cell provided in any one of the above embodiments.

According to some embodiments of the present application, there is provided a plurality of battery cells which are stacked in a second direction, and the battery further comprises end plates arranged at the ends of the plurality of battery cells in the second direction, at least a part of the first opening portion exceeding the end plates in a direction in which the first body portion points to the first opening portion.

In the above solution, the end plates are arranged at the ends of the plurality of battery cells in the second direction, and the end plates have a large connection area with the casing body of an adjacent battery cell to form a constraint on the casing body, thereby reducing the risk of cracking of the casing body near the welding region between the casing body and the end cap.

According to some embodiments of the present application, the end plates are arranged facing the first wall.

In the above solution, the end plates are arranged facing the first wall, and the end plates have a large contact area with the first body portion. During the charge and discharge cycles of the battery cell, the end plates can constrain the first wall to reduce the risk of cracking of the casing body near the welding region between the casing body and the end cap.

According to a third aspect, an embodiment of the present application provides an electric apparatus, comprising the battery cell or the battery provided in any one of the above embodiments.

According to a fourth aspect, an embodiment of the present application provides an energy storage device, comprising the battery cell or the battery provided in any one of the above embodiments.

Additional aspects and advantages of the present application will be partly provided in the following description, and partly become evident in the following description or understood through the practice of the present application.

DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.

FIG. 1 is a schematic structural diagram of a vehicle provided in some embodiments of the present application;

FIG. 2 is an exploded diagram of a battery provided in some embodiments of the present application;

FIG. 3 is an exploded diagram of a battery cell provided in some embodiments of the present application;

FIG. 4 is a sectional diagram of a casing body provided in some embodiments of the present application;

FIG. 5 is a partially enlarged diagram of A in FIG. 4;

FIG. 6 is a schematic structural diagram of a first wall provided in some other embodiments of the present application;

FIG. 7 is a schematic structural diagram of a second wall provided in some embodiments of the present application;

FIG. 8 is a partial schematic structural diagram of a battery provided in some embodiments of the present application;

FIG. 9 is a schematic diagram of the assembly of an end cap with a battery cell at the end provided in some embodiments of the present application; and

FIG. 10 is a partially enlarged view of B in FIG. 9.

In the drawings, the figures are not drawn to actual scale.

Reference Numerals: 100: battery; 10: box; 11: first sub-box; 12: second sub-box; 20: battery cell; 201: casing; 21: casing body; 211: first wall; 2111: first opening portion; 2111a: first section; 2111b: second section; 2111c: first step surface; 2112: first body portion; 212: second wall; 2121: second opening portion; 2121a: third section; 2121b: fourth section; 2121c: second step surface; 2122: second body portion; 213: bottom wall; 22: end cap; 202: electrode assembly; 203: electrode terminal; 30: end plate; 200: controller; 300: motor; 1000: vehicle; X: first direction; Y: second direction; Z: third direction.

DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by those of ordinary skill in the art based on the embodiments of the present application without creative efforts shall fall within the protection scope of the present application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. A person skilled in the art explicitly and implicitly understands that the described embodiments in the present application may be combined with another embodiment.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

The term "and/or" in the present application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

In the embodiments of the present application, the battery cell may be a secondary battery, and the secondary battery refers to a battery cell that may be continuously used by activating an active material by charging the battery cell after discharging thereof.

The battery cell may be, but is not limited to, a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like.

The battery cell generally includes an electrode assembly. The electrode assembly includes a positive electrode, a negative electrode, and a spacer. During charge and discharge of the battery cell, intercalation/deintercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

In some embodiments, the positive electrode and negative electrode may be a positive sheet which may include a positive current collector and a positive active material disposed on at least one surface of the positive current collector.

As an example, the positive current collector has two surfaces opposite in its own thickness direction, and the positive active material is provided on either one or both of the two opposite surfaces of the positive current collector.

As an example, for the positive current collector, a metal foil or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive active material of a battery may also be used.

In some embodiments, the negative electrode may be a negative sheet that may include a negative current collector.

As an example, for the negative current collector, a metal foil or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used.

In some embodiments, the negative current collector has two surfaces opposite in its own thickness direction, and the negative active material is provided on either one or both of the two opposite surfaces of the negative current collector.

As an example, for the negative active material, a negative active material which is known in the art for a battery may be used. As an example, the negative active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative active material of a battery may also be used. These negative active materials may be used alone or in combination of two or more thereof.

In some implementations, the spacer is a separator. The type of the separator is not particularly limited in the present application, and any well-known porous separator with good chemical stability and mechanical stability may be used.

As an example, the main material of the separator may be selected from at least one of glass fiber, non-woven fabric, polyethylene, polypropylene, polyvinylidene fluoride, and ceramics. The separator may be a single-layer thin film or may be a multi-layer composite thin film, which is not particularly limited. When the separator is a multi-layer composite thin film, materials of each layer may be the same or different, which is not particularly limited. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the electrode assembly is a wound structure. The positive sheet and the negative sheet are wound in a winding structure.

In some implementations, the electrode assembly is a laminated structure.

In some implementations, the battery cell may include a casing. The casing is used to enclose components such as the electrode assembly and the electrolyte. The casing may be a steel casing, an aluminum casing, a plastic casing (e.g., polypropylene), a composite metal casing (e.g., a copper-aluminum composite casing), an aluminum plastic film, or the like.

In some implementations, the casing comprises an end cap and a casing body. The casing body is provided with an opening, and the end cap seals the openings to form a sealed space for accommodating substances such as the electrode assembly and the electrolyte. The casing body may be provided with one or more openings. One or more end caps may also be provided.

In some implementations, the casing is provided with at least one electrode terminal thereon, which is electrically connected to a tab of the electrode assembly. The electrode terminal may be directly connected to the tab, or may be indirectly connected to the tab through an adapter. The electrode terminal may be disposed on the end cap, or may be disposed on the casing body.

In some implementations, an explosion-proof valve is provided on the casing. The explosion-proof valve is used to release an internal pressure of the battery cell.

As an example, the battery cell can be a prismatic battery cell, or a battery cell of other shapes. The prismatic battery cell comprises a square-casing battery cell, a blade-shaped battery cell, and a polygon prism battery cell, for example, a hexagonal prism battery cell and the like.

In the development of battery technologies, various design factors, for example, performance parameters such as energy density, discharge capacity, and charge/discharge rate are simultaneously taken into consideration. In addition, reliability of the battery needs to be taken into consideration.

In some embodiments, the battery cell comprises a casing and an electrode assembly disposed in the casing. The casing comprises a casing body and an end cap. The casing body is provided with an opening, and the end cap seals the opening. The casing body is welded to the end cap. Due to the high temperature influence during welding of the casing body and the end cap, the casing body has low strength in the vicinity of the opening of the casing body, and this position is prone to cracking. In particular, when the battery cell adopts a silicon-containing chemical system, since the more the silicon content is, the larger the volume expansion will occur during the intercalation of silicon in lithium ions, so that the casing body is subjected to a larger force, and the casing body is easily cracked near the welding region between the casing body and the end cap, so that the reliability of the battery cell is low.

In view of this, the present application provides a technical solution in which the battery cell comprises a casing and an electrode assembly, the casing comprising a casing body and an end cap, the casing body being provided with an opening and comprising a first wall, the first wall comprising a first opening portion and a first body portion distributed in sequence in a first direction, the first direction being parallel to a thickness direction of the end cap, the first body portion being far away from the opening relative to the first opening portion, and the end cap being connected to the first opening portion and sealing the opening. The electrode assembly is arranged in the casing body and comprises a negative sheet which comprises a negative active material. The negative active material comprises a silicon-based material, and the maximum thickness of the first opening portion is greater than the thickness of the first body portion. The first opening portion has high strength, which can reduce the risk of cracking of the casing body near the welding region between the casing body and the end cap, so that the battery cell has high reliability.

In such a battery cell, the negative active material comprises a silicon-based material, and the battery cell has a large energy density; meanwhile, the first body portion is far away from the opening relative to the first opening portion, the end cap is connected to the first opening portion, the maximum thickness of the first opening portion is greater than the thickness of the first body portion, and the first opening portion is thickened relative to the first body portion, so that the first opening portion has strong strength, which can reduce the risk of cracking of the casing body near the welding region between the casing body and the end cap and improve and the reliability of the battery cell.

The battery disclosed in the embodiments of the present application may be, but not limited to, used in an electric device such as a vehicle, a ship, or an aircraft. The battery disclosed in the present application may be used to form a power source system of the electric device.

An embodiment of the present application provides an electric apparatus using a battery as a power source, where the electric device apparatus may be, but is not limited to, a mobile phone, a tablet computer, a notebook computer, an electric toy, an electric tool, an electric bicycle, an electric motorcycle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an example in which an electric apparatus in an embodiment of the present application is a vehicle 1000.

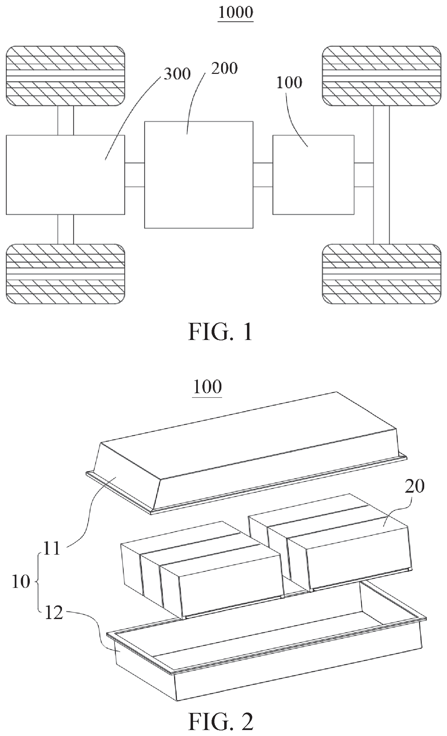

Refer to FIG. 1. FIG. 1 is a schematic structural diagram of a vehicle provided in some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used for supplying power to the vehicle 1000, for example, the battery 100 may be used as an operating power source for the vehicle 1000, used for a circuitry of the vehicle 1000, for example, used for operating power requirements for starting, navigation, and running of the vehicle 1000.

The vehicle 1000 may further include a controller 200 and a motor 300, where the controller 200 is used to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Reference is made to FIG. 2. FIG. 2 is an exploded diagram of a battery provided in some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box 10 may include a first sub-box 11 and a second sub-box 12, the first sub-box 11 and the second sub-box 12 cover each other, and the first sub-box 11 and the second sub-box 12 jointly define the accommodation space for accommodating the battery cell 20. The second sub-box 12 may be a hollow structure with an opening at one end, the first sub-box 11 may be a plate-shaped structure, and the first sub-box 11 covers an opening side of the second sub-box 12, so that the first sub-box 11 and the second sub-box 12 jointly define the accommodation space. Alternatively, the first sub-box 11 and the second sub-box 12 each may be a hollow structure with an opening at one end, and an opening side of the first sub-box 11 covers an opening side of the second sub-box 12.

In the battery 100, a plurality of battery cells 20 may be disposed, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a busbar component for implementing an electrical connection between the plurality of battery cells 20.

The battery cell 20 may be a secondary battery or a primary battery, and the battery cell 20 may further be a lithium-sulfur battery, a sodium-ion battery, or a magnesium-ion battery, without being limited thereto.

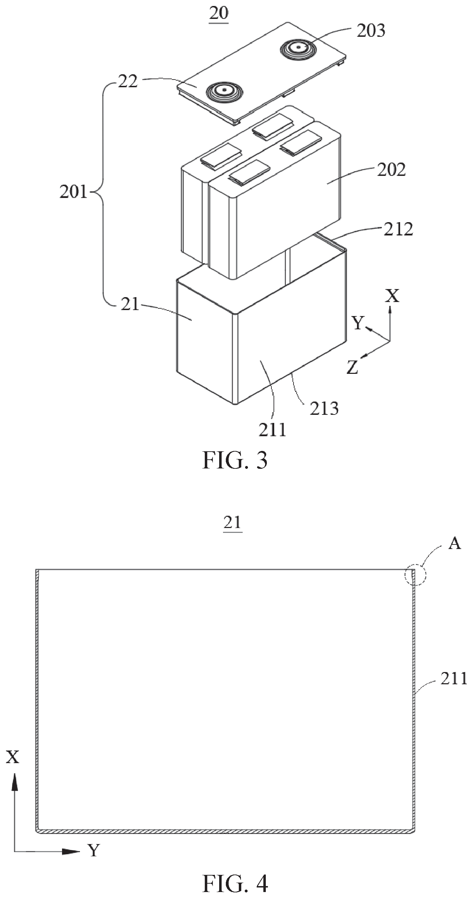

Referring to FIG. 3, FIG. 3 is an exploded diagram of a battery cell provided in some embodiments of the present application. As shown in FIG. 3, the battery cell 20 comprises a casing 201, an electrode assembly 202, and other functional components. The casing 201 comprises a casing body 21 and an end cap 22. The casing body 21 is provided with an opening, and the end cap 22 seals the opening to isolate an internal environment of the battery cell 20 from an external environment.

The casing body 21 is an assembly for cooperating with the end cap 22 to form the internal environment of the battery cell 20, where the formed internal environment may be used to accommodate the electrode assembly 202, an electrolyte solution, and other components. The casing body 21 and the end cap 22 may be independent components. The casing body 21 may be of various shapes and sizes. Specifically, the shape of the casing body 21 may be determined according to a specific shape and dimension of the electrode assembly 202. The casing body 21 may be made of various materials, for example, copper, iron, aluminum, stainless steel, an aluminum alloy, etc.

The end cap 22 is a component that covers the opening of the casing body 21 to isolate the internal environment of the battery cell 20 from the external environment. Without limitation, the shape of the end cap 22 may adapt to the shape of the casing body 21 to fit the casing body 21. Optionally, the end cap 22 may be made of a material with certain hardness and strength (e.g., an aluminum alloy). As such, the end cap 22 is less prone to deformation under compressive impact, thereby enabling the battery cell 20 to have higher structural strength and improved reliability. The end cap 22 may be provided with a functional component such as an electrode terminal 203. The electrode terminal 203 may be used to be electrically connected to the electrode assembly 202 for outputting electric energy from or inputting electric energy into the battery cell 20. The end cap may also be made of various materials, such as copper, iron, aluminum, stainless steel, an aluminum alloy, etc., which are not specially limited in the embodiments of the present application. In some embodiments, an insulation structure may be further provided on an inner side of the end cap 22, and the insulation structure may be used to isolate an electrical connection component in the casing body 21 from the end cap 22 to reduce the risk of a short circuit. For example, the insulation structure may be made of plastic, rubber, or the like.

The electrode assembly 202 is a component in the battery cell 20 in which an electrochemical reaction occurs. The casing body 21 may comprise one or more electrode assemblies 202. The electrode assembly 202 is mainly formed by winding or stacking a positive sheet and a negative sheet, and a separator is generally provided between the positive sheet and the negative sheet for separating the positive sheet from the negative sheet to avoid an inner short circuit between the positive sheet and the negative sheet. Parts of the positive sheet and the negative sheet with an active substance constitute a main body portion of the electrode assembly, and parts of the positive sheet and the negative sheet without an active substance each constitute a tab. A positive tab and a negative tab may both be located at one end of the main body portion or be located at two ends of the main body portion respectively.

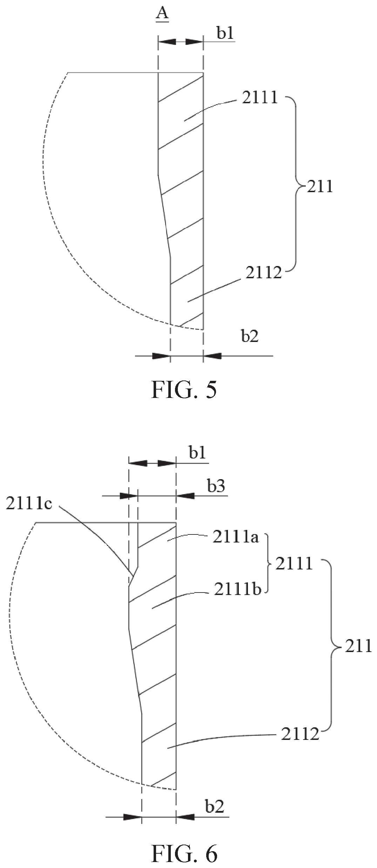

Referring to FIG. 3, and further referring to FIG. 4, FIG. 4 is a sectional diagram of a casing body provided in some embodiments of the present application, and is a sectional diagram of the casing body before the casing body is assembled with an end cap; and FIG. 5 is a partially enlarged diagram of A in FIG. 4. According to some embodiments of the present application, the present application provides a battery cell 20, comprising a casing 201 and an electrode assembly 202. The casing 201 comprises a casing body 21 and an end cap 22. The casing body 21 is provided with an opening and comprises a first wall. The first wall comprises a first opening portion 2111 and a first body portion 2112 distributed in sequence in a first direction X which is parallel to a thickness direction of the end cap 22. The first body portion 2112 is far away from the opening relative to the first opening portion 2111. The end cap 22 is connected to the first opening portion 2111 and seals the opening. The electrode assembly 202 is arranged in the casing body 21 and comprises a negative sheet. The negative sheet comprises a negative active material. The negative active material comprises a silicon-based material, and the maximum thickness of the first opening portion 2111 is greater than the thickness of the first body portion 2112.

In the figures, the direction indicated by the letter X is the first direction. In FIG. 5, the maximum thickness of the first opening portion 2111 may be b1, and the thickness of the first body portion 2112 may be b2, which satisfies b1> b2.

In the first direction X, the first body portion 2112 is far away from the opening compared to the first opening portion 2111, and the first opening portion 2111 may be enclosed to form an opening, so that the end cap 22 is connected to the first wall 211.

In some embodiments, the end cap 22 may be welded to the first wall 211 to form a first welding region, and a part of the first opening portion 2111 may be welded to the end cap 22 to form the first welding region which may be referred to as a weld mark.

In some embodiments, the first body portion 2112 may be of an equal-thickness structure, and the thickness of the first body portion 2112 may be the maximum thickness of the first body portion 2112, that is, the thickness of the first body portion 2112 at any position.

Before the end cap 22 is assembled with the first wall 211, the first opening portion 2111 may be of an equal-thickness structure, or may be of a variable-thickness structure. When the first opening portion 2111 is of an equal-thickness structure, the maximum thickness of the first opening portion 2111 is the thickness of the first opening portion 2111 at any position; and when the first opening portion 2111 is of a variable-thickness structure, the maximum thickness of the first opening portion 2111 may be the thickness at a position where the thickness of the first opening portion 2111 is the maximum. After the end cap 22 is welded to the first opening portion 2111, the maximum thickness of the first opening portion 2111 is the thickness at the position where the thickness of the first opening portion 2111 is the maximum.

Optionally, when the first opening portion 2111 is of a variable-thickness structure, the thickness of the first opening portion 2111 may gradually decrease from the end away from the first body portion 2112 to the end close to the first body portion 2112, and a region in which the thickness of the first opening portion 2111 is the maximum is located at the end away from the first body portion 2112.

The negative material comprises a silicon-based material. The battery cell 20 is a silicon-containing chemical system, and has a high energy density.

According to some embodiments of the present application, in the battery cell 20 of the silicon-containing chemical system, the battery cell 20 has a high energy density, the opening of the first wall 211 is thickened, and the maximum thickness of the first opening portion 2111 is greater than the thickness of the first body portion 2112, which can enhance the strength of the first opening portion 2111, so that the first opening portion 2111 has high strength, thereby reducing the risk of cracking of the casing body 21 near the welding region between the casing body 21 and the end cap 22, and improving the reliability of the battery cell 20.

In some embodiments, in a thickness direction of the first wall 211, the first body portion 2112 is provided with a first surface facing the interior of the battery cell 20, and a part of the first opening portion 2111 may protrude from the first surface.

In some embodiments, in the thickness direction of the first wall 211, the first body portion 2112 is provided with a second surface facing away from the interior of the battery cell 20, and a part of the first opening portion 2111 may protrude from the second surface.

In some embodiments, in the thickness direction of the first wall 211, the first body portion 2112 is provided with a first surface facing the interior of the battery cell 20 and a second surface facing away from the interior of the battery cell 20, a part of the first opening portion 2111 may protrude from the first surface, and a part of the first opening portion 2111 may protrude from the second surface.

According to some embodiments of the present application, a mass ratio of the silicon-based material in the negative active material is a, the maximum thickness of the first opening portion 2111 is b1, the thickness of the first body portion 2112 is b2, b=(b1-b2)/b2, and a and b satisfy at least one of the following conditions:

$$(1)\ 0.2 \leq b/a \leq 10;$$

$$(2)\ 3\% \leq a \leq 100\%;$$

and

$$(3)\ 0.1 \leq b \leq 0.5.$$

b/a is the ratio of b to a, and may be any value between 0.2 and 10. For example, b/a may be, but is not limited to, 0.2, 0.4, 0.6, 0.8, 1, 2, 3, 4, 5, 6, 7, 8, 9, 10, etc.

Optionally, a may be, but is not limited to, 3%, 5%, 7%, 9%, 10%, 20%, 30%, 40%, 50%, 60%, 70%, 80%, 90%, 100%, etc.

Optionally, b may be, but is not limited to, 0.1, 0.12, 0.14, 0.16, 0.18, 0.2, 0.22, 0.24, 0.26, 0.28, 0.3, 0.32, 0.34, 0.36, 0.38, 0.4, 0.42, 0.44, 0.46, 0.48, 0.5, etc.

In the above solution, the mass ratio of the silicon-based material in the negative active material, the maximum thickness of the first opening portion 2111, and the thickness of the first body portion 2112 satisfy the above relationship, which not only satisfies that the first opening portion 2111 has high strength, but also enables the battery cell 20 to have a high energy density.

According to some embodiments of the present application, a and b satisfy at least one of the following conditions:

$$(1)\ 0.4 \leq b/a \leq 6;$$

$$(2)\ 5\% \leq a \leq 30\%,$$

and

$$(3)\ 0.12 \leq b \leq 0.3.$$

Optionally, b/a may be, but is not limited to, 0.4, 0.8, 1.2, 1.6, 2, 2.4, 2.8, 3.2, 3.6, 4, 4.4, 4.8, 5.2, 5.6, 6, etc.

Optionally, a may be, but is not limited to, 5%, 5.5%, 6%, 7%, 8%, 9%, 10%, 12%, 14%, 16%, 18%, 20%, 22%, 24%, 26%, 30%, etc.

Optionally, b may be, but is not limited to, 0.12, 0.14, 0.16, 0.18, 0.2, 0.22, 0.24, 0.26, 0.28, 0.3, etc.

In the above solution, compared with $0.2 \leq b/a \leq 10$, $3\% \leq a \leq 100\%$, and $0.1 \leq b \leq 0.5$, when

0.4≤b/a≤6, 5%≤a≤30%, and 0.12≤b≤0.3, the battery cell 20 can have a higher energy density, the casing body 21 is subjected to a smaller expansion force, and the first opening portion 2111 has higher strength, thereby reducing the risk of cracking of the casing body 21 near the welding region between the casing body 21 and the end cap 22.

Referring to FIG. 6, FIG. 6 is a schematic structural diagram of a first wall provided in some other embodiments of the present application, and is a schematic structural diagram of the first wall before the end cap is assembled with the casing body. According to some embodiments of the present application, the first opening portion 2111comprises a first section 2111a and a second section 2111b connected to each other. The first section 2111a, the second section 2111b, and the first body portion 2112 are distributed in sequence in the first direction X. The maximum thickness of the second section 2111b is greater than the thickness of the first body portion 2112, and the maximum thickness of the second section 2111b is greater than the maximum thickness of the first section 2111a. The end cap 22 is connected to the first section 2111a.

The first section 2111a, the second section 2111b, and the first body portion 2112 are distributed in sequence in the first direction X, the first section 2111a is closer to the opening than the second section 2111b, and the first section 2111a is used to be connected to the end cap 22.

The maximum thickness of the first section 2111a may be b3, and the maximum thickness of the second section 2111b may be b1, which satisfies b1>b3, that is, the maximum thickness of the second section 2111b is greater than the maximum thickness of the first section 2111a, so that after the end cap 22 is connected to the first section 2111a, the first opening portion 2111 has high strength.

Optionally, b3 satisfies 0.1 mm≤b1-b3≤0.2 mm.

The second section 2111b is disposed immediately adjacent to the first section 2111a, and at least a part of the second section 2111b is a heat affected zone after the end cap 22 is welded to the first section 2111a.

In the above solution, the first section 2111a, the second section 2111b, and the first body portion 2112 are distributed in sequence in the first direction X, and the end cap 22 is connected to the first section 2111a, so that the second section 2111b is immediately adjacent to the connection between the end cap 22 and the first section 2111a. The maximum thickness of the second section 2111b is greater than the thickness of the first body portion 2112, and the maximum thickness of the second section 2111b is greater than the maximum thickness of the first section 2111a, so that the first opening portion 2111 has high strength, which can reduce the risk of cracking of the first wall 211 near the welding region between the first wall 211 and the end cap 22, and improve the service life and reliability of the battery cell 20.

In some embodiments, before the first section 2111a is connected to the end cap 22, the maximum thickness of a region where the casing body 21 is in the first section 2111a may be greater than the thickness of the first body portion 2112, that is, in the manufacturing process of the battery cell 20, the region where the casing body 21 is in the first section 2111a may also be thickened relative to the first body portion 2112 to improve the firmness of the connection between the end cap 22 and the first section 2111a.

In some embodiments, before the first section 2111a is connected to the end cap 22, the maximum thickness of the region where the casing body 21 is in the first section 2111a may be the same as the maximum thickness of the second section 2111b, that is, the first opening portion 2111 may be of an equal-thickness structure. After the first opening portion 2111 is welded to the end cap 22, a part of the region where the casing body 21 is in the first section 2111a is welded to a part of the end cap 22 to form a first welding region, and the remaining part becomes the first section 2111a.

According to some embodiments of the present application, a first step surface 2111c is formed between the second section 2111b and the first section 2111a, and the end cap 22 is overlapped with the first step surface 2111c.

Before the first section 2111a is connected to the end cap 22, the maximum thickness of the region where the casing body 21 is in the first section 2111a is less than the maximum thickness of the second section 2111b. A first step surface 2111c is formed between the second section 2111b and the first section 2111a, so that when the end cap 22 is assembled with the casing body 21, the first step surface 2111c can position the end cap 22, which facilitates the assembly of the end cap 22 and the casing body 21.

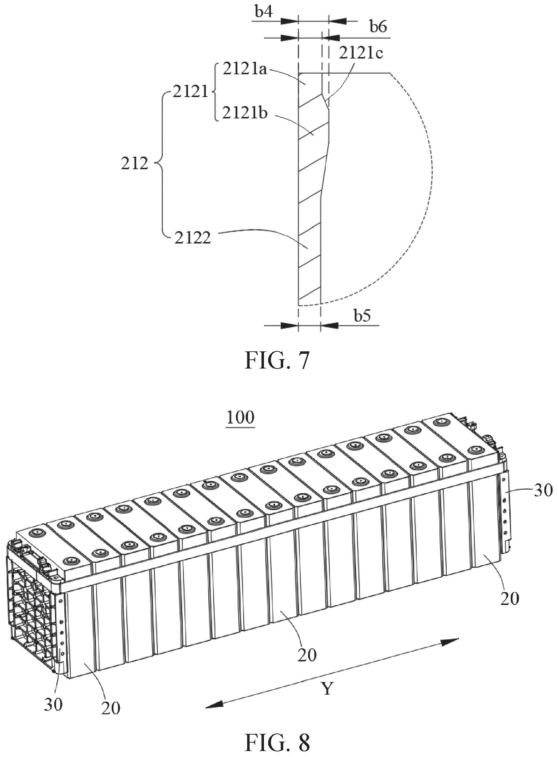

Referring to FIG. 3, and further referring to FIG. 7, FIG. 7 is a schematic structural diagram of a second wall provided in some embodiments of the present application, and is a schematic structural diagram of the second wall before the casing body is assembled with the end cap. According to some embodiments of the present application, the casing body 21 further comprises a second wall 212 which is disposed adjacent to the first wall 211 and connected to the end cap 22. An area of an outer surface of the first wall 211 is greater than an area of an outer surface of the second wall 212 and is greater than an area of an outer surface of the end cap 22.

The second wall 212 is adjacent to the first wall 211, and the second wall 212 is adjacent to the end cap 22. The second wall 212 and the first wall 211 are jointly enclosed to form an opening.

In some embodiments, there may be provided two first walls 211 which are disposed opposite to each other in a second direction Y and; there may be provided two second walls 212 which are disposed opposite to each other in a third direction Z. The two second walls 212 and the two first walls 211 are enclosed to form an accommodating cavity having an opening, and the electrode assembly 202 is accommodated in the accommodating cavity.

An area of an outer surface of the first wall 211 is larger than an area of an outer surface of the second wall 212, and the area of the outer surface of the first wall 211 is larger than an area of an outer surface of the end cap 22. The first wall 211 may be a large surface of the battery cell 20.

In the above solution, the first wall 211 may be a large surface of the battery cell 20. During thermal runaway of the battery cell 20, large gas production, or charge and discharge cycles of the battery cell 20, the first wall 211 is subjected to a large force, and the opening of the first wall 211 is thickened, which can effectively reduce the risk of cracking of the casing body 21 near the welding region between the casing body 21 and the end cap 22.

Referring to FIG. 7, according to some embodiments of the present application, the second wall 212 comprises a second opening portion 2121 and a second body portion 2122 which are distributed in sequence in the first direction X. The second body portion 2122 is far away from the opening relative to the second opening portion 2121. The maximum thickness of the second opening portion 2121 is greater than the thickness of the second body portion 2122.

In the first direction X, the second body portion 2122 is farther away from the opening than the second opening portion 2121, and the second opening portion 2121 may be enclosed to form an opening. In the figure, the maximum thickness of the second opening portion 2121 is b4, and the thickness of the second body portion 2122 is b5, which satisfies b4>b5.

In some embodiments, a part of the second opening portion 2121 may be welded to the end cap 22 to form a second welding region which may be referred to as a weld mark.

In some embodiments, the second body portion 2122 may be of an equal-thickness structure, and the thickness of the second body portion 2122 may be the maximum thickness of the second body portion 2122.

In some embodiments, the second opening portion 2121 may be of an equal-thickness structure, or may be of a variable-thickness structure. When the second opening portion 2121 is of an equal-thickness structure, the maximum thickness of the second opening portion 2121 is the thickness of the second opening portion 2121 at any position; and when the second opening portion 2121 is of a variable-thickness structure, the maximum thickness of the second opening portion 2121 may be the thickness at a position where the thickness of the second opening portion 2121 is the maximum.

Optionally, when the second opening portion 2121 is of a variable-thickness structure, the thickness of the second opening portion 2121 may gradually decrease from the end away from the second body portion 2122 to the end close to the second body portion 2122, and a region where the thickness of the second opening portion 2121 is the maximum is located at the end away from the second body portion 2122.

In the above solution, the maximum thickness of the second opening portion 2121 is greater than the thickness of the second body portion 2122, and the second opening portion 2121 is thickened compared to the second body portion 2122, so that the second opening portion 2121 has strong strength, which can reduce the risk of cracking of the casing body 21 near the welding region between the casing body 21 and the end cap 22.

Referring to FIG. 7, according to some embodiments of the present application, the second opening portion 2121 comprises a third section 2121a and a fourth section 2121b connected to each other. The third section 2121a, the fourth section 2121b, and the second body portion 2122 are distributed in sequence in the first direction X. The maximum thickness of the fourth section 2121b is greater than the thickness of the second body portion 2122, and the maximum thickness of the fourth section 2121b is greater than the maximum thickness of the third section 2121a. A second step surface 2121c is formed between the fourth section 2121b and the third section 2121a, and the end cap 22 is overlapped with the second step surface 2121c and connected to the third section 2121a.

The third section 2121a, the fourth section 2121b, and the second body portion 2122 are distributed in sequence in the first direction X, the third section 2121a is closer to the opening than the fourth section 2121b, and the third section 2121a is used to be connected to the end cap 22.

The maximum thickness of the third section 2121a may be b6, and the maximum thickness of the fourth section 2121b may be b4, which satisfies b4>b6, that is, the maximum thickness of the fourth section 2121b is greater than the maximum thickness of the third section 2121a, so that after the end cap 22 is connected to the third section 2121a, the second opening portion 2121 has high strength.

Optionally, b6 satisfies 0.1 mm $\leq$ b4-b6 $\leq$ 0.2 mm.

Since the second wall 212 is a side surface of the battery cell 20, in the manufacturing process of the battery cell 20, a region where the casing body 21 is in the third section 2121a is usually thinned, so that the maximum thickness of the region is less than the thickness of the second body portion 2122, so as to facilitate the welding of the second wall 212 and the end cap 22. In the present application, before the third section 2121a is connected to the end cap 22, the region where the casing body 21 is in the third section 2121a is thickened, so that the maximum thickness of the region where the casing body 21 is in the third section 2121a may be greater than or equal to the thickness of the second body portion 2122, so as to improve the firmness of the connection between the end cap 22 and the third section 2121a.

The fourth section 2121b is disposed immediately adjacent to the third section 2121a, and at least a part of the fourth section 2121b is a heat affected zone after the end cap 22 is welded to the third section 2121a.

In the manufacturing process of the battery cell 20, since the second step surface 2121c is formed between the fourth section 2121b and the third section 2121a, the end cap 22 can be positioned by overlapping the end cap 22 with the second step surface 2121c.

In the above solution, the third section 2121a, the fourth section 2121b, and the second body portion 2122 are distributed in sequence in the first direction X, and the end cap 22 is connected to the third section 2121a, so that the fourth section 2121b is immediately adjacent to the connection between the end cap 22 and the third section 2121a. The maximum thickness of the fourth section 2121b is greater than the thickness of the second body portion 2122, and the maximum thickness of the fourth section 2121b is greater than the maximum thickness of the third section 2121a, so that the second opening portion 2121 has high strength, which can reduce the risk of cracking of the casing body 21 near the welding region between the casing body 21 and the end cap 22, and improve the service life and reliability of the battery cell 20. The end cap 22 is overlapped with the second step surface 2121c, which facilitates the positioning of the end cap 22.

Referring to FIG. 3, according to some embodiments of the present application, the casing body 21 may further comprises a bottom wall 213. There is provided two first walls 211 and two second walls 212. The two first walls 211 are disposed opposite to each other in the second direction Y, and the two second walls 212 are disposed opposite to each other in the third direction Z. The two first walls 211 and the two second walls 212 are enclosed around the bottom wall 213. The two first walls 211 and the two second walls 212 are integrally formed with the bottom wall 213, and the bottom wall 213 is disposed opposite to the end cap 22 in the first direction X.

According to some embodiments of the present application, the maximum thickness of the first opening portion 2111 is b1, and the thickness of the first body portion 2112 is b2, which satisfies $0.1 \leq b \leq 0.5$, $b=(b1-b2)/b2$, and $0.35 \text{ mm} \leq b2 \leq 0.8 \text{ mm}$.

b2 may be any value between 0.35 mm and 0.8 mm. Optionally, b2 may be, but is not limited to, 0.35 mm, 0.4 mm, 0.45 mm, 0.5 mm, 0.55 mm, 0.6 mm, 0.65 mm, 0.7 mm, 0.75 mm, 0.8 mm, etc.

Optionally, $0.45 \text{ mm} \leq b1 \leq 0.9 \text{ mm}$. b1 may be, but is not limited to, 0.45 mm, 0.5 mm, 0.55 mm, 0.6 mm, 0.65 mm, 0.7 mm, 0.75 mm, 0.8 mm, 0.85 mm, 0.9 mm, etc.

In the above solution, b1 and b2 satisfy the above relationship, and the first opening portion 2111 has both strong strength and a low processing and manufacturing difficulty, which facilitates the processing and manufacturing of the casing body 21.

According to some embodiments of the present application, $0.12 \leq b \leq 0.3$, and $0.4 \text{ mm} \leq b2 \leq 0.6 \text{ mm}$.

Optionally, b2 may be, but is not limited to 0.4 mm, 0.42 mm, 0.44 mm, 0.46 mm, 0.48 mm, 0.5 mm, 0.52 mm, 0.54 mm, 0.56 mm, 0.58 mm, 0.6 mm, etc.

Optionally, $0.6 \text{ mm} \leq b1 \leq 0.8 \text{ mm}$. b1 may be, but is not limited to, 0.6 mm, 0.62 mm, 0.64 mm, 0.66 mm, 0.68 mm, 0.7 mm, 0.72 mm, 0.74 mm, 0.76 mm, 0.78 mm, 0.8 mm, etc.

In the above solution, compared with $0.1 \leq b \leq 0.5$ and $0.35 \text{ mm} \leq b2 \leq 0.8 \text{ mm}$, when $0.12 \leq b \leq 0.3$ and $0.4 \text{ mm} \leq b2 \leq 0.6 \text{ mm}$, in the case where the first opening portion 2111 has stronger strength, the first opening portion 211 has a lower processing and manufacturing difficulty.

According to some embodiments of the present application, b5 satisfies: $0.4 \text{ mm} \leq b5 \leq 0.85 \text{ mm}$.

Optionally, b5 may be, but is not limited to, 0.4 mm, 0.45 mm, 0.5 mm, 0.55 mm, 0.6 mm, 0.65 mm, 0.7 mm, 0.75 mm, 0.8 mm, 0.85 mm, etc.

Optionally, $0.45 \text{ mm} \leq b5 \leq 0.65 \text{ mm}$.

According to some embodiments of the present application, b4 satisfies: $0.5 \text{ mm} \leq b4 \leq 0.95 \text{ mm}$.

Optionally, $0.65 \text{ mm} \leq b4 \leq 0.85 \text{ mm}$.

Optionally, b4 may be, but is not limited to, 0.5 mm, 0.55 mm, 0.6 mm, 0.65 mm, 0.7 mm, 0.75 mm, 0.8 mm, 0.85 mm, 0.9 mm, 0.95 mm, etc.

According to some embodiments of the present application, the material of the casing body 21 is aluminum or an aluminum alloy.

In the above solution, the material of the casing body 21 is aluminum or an aluminum alloy, which is low in cost.

According to some embodiments of the present application, the casing body 21 is of a prismatic structure with openings at both ends, and there is provided two end caps 22 which are respectively connected to two first opening portions 2111 and seal the corresponding openings.

When the casing body 21 is of a prismatic structure, the battery cell 20 may be a square battery. In other embodiments, the casing body 21 may be a hexagonal prism, an octagonal prism, or the like.

When the positive tab and the negative tab are disposed at two ends of the electrode assembly 202, the casing body 21 is provided with two openings, and a positive electrode terminal and a negative electrode terminal may be respectively disposed on two end caps 22, so as to be electrically connected to the positive tab and the negative tab, respectively, to facilitate charging and discharging of the battery cell 20.

In the above solution, openings are respectively provided at two ends of the casing body 21. The two openings are both thickened to reduce the risk of cracking of the casing body 21 near the welding region between the casing body 21 and the end cap 22.

Referring to FIG. 8, FIG. 8 is a partial schematic structural diagram of a battery provided in some embodiments of the present application. According to some embodiments of the present application, an embodiment of the present application provides a battery 100, comprising the battery cell 20 provided in any one of the above embodiments.

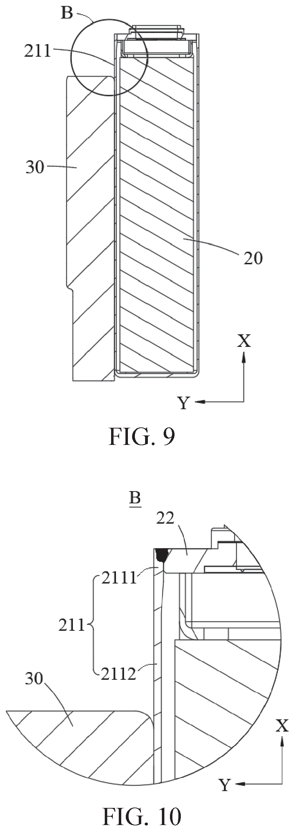

Referring to FIG. 8, and further referring to FIG. 9 and FIG. 10, FIG. 9 is a schematic diagram of the assembly of the end cap and the battery cell at the end provided in some embodiments of the present application, and FIG. 10 is a partially enlarged diagram of B in FIG. 9. According to some embodiments of the present application, there is provided a plurality of battery cells 20 which are stacked in the second direction Y. The battery 100 further comprises end plates 30 which are disposed at the ends of the plurality of battery cells 20 in the second direction Y. At least a part of the first opening portion 2111 exceeds the end plates 30 in a direction in which the first body portion 2112 points to the first opening portion 2111.

The plurality of battery cells 20 are stacked in the second direction Y. In the second direction Y, the end plates 30 are disposed at the ends of the plurality of battery cells 20. The end plates 30 are connected to the battery cells 20 located at the ends in the second direction Y among the plurality of battery cells 20. The end plates 30 can limit the positions of the battery cells 20 at the ends and constrain deformation of the battery cells 20.

In the above solution, the end plates 30 are disposed at the ends of the plurality of battery cells 20 in the second direction Y, and the end plates 30 have a large connection area with the casing body 21 of an adjacent battery cell 20 to form a constraint on the casing body 21, thereby reducing the risk of cracking of the casing body 21 near the welding region between the casing body 21 and the end cap 22.

According to some embodiments of the present application, the end plates 30 are arranged facing the first wall 211.

In the above solution, the end plates 30 are arranged facing the first wall 211. The end plates 30 have a large contact area with the first body portion 2112. During the charge and discharge cycles of the battery cell 20, the end plates 30 can constrain the first wall 211 to reduce the risk of cracking of the casing body 21 near the welding region between the casing body 21 and the end cap 22.

According to some embodiments of the present application, an embodiment of the present application provides an electric apparatus, comprising the battery cell 20 or the battery 100 provided in any one of the above embodiments.

The electric apparatus may be any one of the above systems or devices that use the battery cell 20 or the battery 100, and the battery cell 20 or the battery 100 is used to provide electrical energy.

According to some embodiments of the present application, an embodiment of the present application provides an energy storage device, comprising the battery cell 20 or the battery 100 provided in any one of the above embodiments.

According to some embodiments of the present application, referring to FIGS. 3-7, an embodiment of the present application provides a battery cell 20 which is in the shape of a rectangular parallelepiped. The battery cell 20 comprises a casing 201, an electrode assembly 202, and an electrode terminal 203. The casing 201 comprises a casing body 21 and an end cap 22. The casing body 21 is provided with an opening. The electrode assembly 202 is arranged in the casing body 21. The electrode terminal 203 is arranged on the end cap 22. The electrode terminal 203 is electrically connected to a tab of the electrode assembly 202. The enc cap 22 seals the opening. The casing body 21 comprises two first walls 211 disposed opposite to each other in the second direction Y, two second walls 212 disposed opposite to each other in the third direction Z, and a bottom wall 213. The two first walls 211 and the two second walls 212 are enclosed around the bottom wall 212. The two first walls 211 and the two second walls 212 are formed integrally with the bottom wall 213. The bottom wall 213 and the end cap 22 are arranged opposite to each other in the first direction X. The end cap 22 is connected to the first wall 211 and the second wall 212 to seal the opening. An area of an outer surface of the first wall 211 is larger than an area of an outer surface of the second wall 212 and larger than an area of an outer surface of the bottom wall 213.

The first wall 211 comprises a first opening portion 2111 and a first body portion 2112 distributed in sequence in the first direction X. The first body portion 2112 is farther from the opening than the first opening portion 2111. The end cap 22 is connected to the first opening portion 2111. The maximum thickness of the first opening portion 2111 is greater than the thickness of the first body portion 2112. The maximum thickness of the first opening portion 2111 is b1, and the thickness of the first body portion 2112 is b2.

The second wall 212 comprises a second opening portion 2121 and a second body portion 2122 distributed in sequence in the first direction X. The second body portion 2122 is farther from the opening than the second opening portion 2121. The second opening portion 2121 comprises a third section 2121a and a fourth section 2121b connected to each other. The third section 2121a, the fourth section 2121b, and the second body portion 2122 are distributed in sequence in the first direction X, and the end cap 22 is connected to the third section 2121a. The maximum thickness of the fourth section 2121b is greater than the thickness of the second body portion 2122, and the maximum thickness of the fourth section 2121b is greater than the maximum thickness of the third section 2121a. A second step surface 2121c is formed between the fourth section 2121b and the third section 2121a, and the end cap 22 is overlapped with the second step surface 2121c.

A mass ratio of the silicon-based material in the negative active material is a, which satisfies $0.2 \leq b/a \leq 10$, $b=(b1-b2)/b2$, $3\% \leq a \leq 100\%$, $0.1 \leq b \leq 0.5$, and $0.35\ \text{mm} \leq b2 \leq 0.8\ \text{mm}$.

For the battery cell 20 according to the embodiments of the present application, the battery cell 20 has a high energy density, and both the first opening portion 2111 and the second opening portion 2121 have high strength, which can reduce the risk of cracking of the casing body 21 near the welding region between the casing body 21 and the end cap 22, and improve the reliability of the battery cell 20.

Although the present application has been described with reference to some preferred embodiments, various modifications to this application and replacements of the components therein with equivalents can be made without departing from the scope of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising:

   a casing, comprising a casing body and an end cap, the casing body being provided with an opening and comprising a first wall, the first wall comprising a first opening portion and a first body portion which are distributed in sequence in a first direction, the first direction being parallel to a thickness direction of the end cap, the first body portion being far away from the opening relative to the first opening portion, and the end cap being connected to the first opening portion and sealing the opening; and
   an electrode assembly which is arranged in the casing body and comprises a negative sheet, the negative sheet comprising a negative active material,
   wherein the negative active material comprises a silicon-based material, and a maximum thickness of the first opening portion is greater than a thickness of the first body portion.

2. The battery cell according to claim 1, wherein a mass ratio of the silicon-based material in the negative active material is a, the maximum thickness of the first opening portion is b1, the thickness of the first body portion is b2, b=(b1-b2)/b2, and a and b satisfy at least one of the following conditions:

   $$(1)\ 0.2 \leq b/a \leq 10;$$

   $$(2)\ 3\% \leq a \leq 100\%;$$

   and

   $$(3)\ 0.1 \leq b \leq 0.5.$$

3. The battery cell according to claim 2, wherein a and b satisfy at least one of the following conditions:

   $$(1)\ 0.4 \leq b/a \leq 6;$$

   $$(2)\ 5\% \leq a \leq 30\%;$$

   and

   $$(3)\ 0.12 \leq b \leq 0.3.$$

4. The battery cell according to any one of claims 1-3, wherein the first opening portion comprises a first section and a second section that are connected to each other, the first section, the second section, and the first body portion being distributed in sequence in the first direction, the maximum thickness of the second section being greater than the thickness of the first body portion, the maximum thickness of the second section being greater than the maximum thickness of the first section, and the end cap being connected to the first section.

5. The battery cell according to claim 4, wherein a first step surface is formed between the second section and the first section, and the end cap is overlapped with the first step surface.

6. The battery cell according to any one of claims 1-5, wherein the casing body further comprises a second wall arranged adjacent to the first wall, the second wall being connected to the end cap, and an area of an outer surface of the first wall being greater than an area of an outer surface of the second wall and being greater than an area of an outer surface of the end cap.

7. The battery cell according to claim 6, wherein the second wall comprises a second opening portion and a second body portion that are distributed in sequence in the first direction, the second body portion being far away from the opening relative to the second opening portion, and a maximum thickness of the second opening portion being greater than a thickness of the second body portion.

8. The battery cell according to claim 7, wherein the second opening portion comprises a third section and a fourth section that are connected to each other, the third section, the fourth section, and the second body portion being distributed in sequence in the first direction, a maximum thickness of the fourth section being greater than the thickness of the second body portion, the maximum thickness of the fourth section being greater than a maximum thickness of the third section, a second step surface being formed between the fourth section and the third section, and the end cap being overlapped with the second step surface and connected to the third section.

9. The battery cell according to any one of claims 1-8, wherein the maximum thickness of the first opening portion is b1, and the thickness of the first body portion is b2, wherein $0.1 \leq b \leq 0.5$, $b=(b1-b2)/b2$, and $0.35\ mm \leq b2 \leq 0.8\ mm$.

10. The battery cell according to claim 9, wherein $0.12 \leq b \leq 0.3$, and $0.4\ mm \leq b2 \leq 0.6\ mm$.

11. The battery cell according to any one of claims 1-10, wherein the material of the casing body is aluminum or an aluminum alloy.

12. The battery cell according to any one of claims 1-11, wherein the casing body is of a prismatic structure with the openings at both ends thereof, and the casing comprises two end caps which are respectively connected to the two first opening portions and seal the corresponding openings.

13. A battery, comprising the battery cell according to any one of claims 1-12.

14. The battery according to claim 13, wherein the battery comprises a plurality of battery cells which are stacked in a second direction, and the battery further comprises end plates arranged at ends of the plurality of battery cells in the second direction, at least a part of the first opening portion exceeding the end plates in a direction in which the first body portion points to the first opening portion

15. The battery according to claim 14, wherein the end plates are arranged facing the first wall.

16. An electric apparatus, comprising the battery cell according to any one of claims 1-12 or the battery according to any one of claims 13-15, wherein the battery cell or the battery is used to provide electric energy.

17. An energy storage device, comprising the battery cell according to any one of claims 1-12 or the battery according to any one of claims 13-15.

FIG. 1

FIG. 2

FIG. 3

FIG. 4

FIG. 5

FIG. 6

b4

b6

2121c

2121a

2121

2121b

212

2122

b5

FIG. 7

100

30

20

20

30 20

Y

FIG. 8

FIG. 9

FIG. 10

## INTERNATIONAL SEARCH REPORT

| International application No. |
| --- |
| **PCT/CN2023/135632** |

### A. CLASSIFICATION OF SUBJECT MATTER

H01M50/103(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 电池, 箱, 盖, 开口, 壁, 厚度, 负极, 硅, battery, box, cover, opening, wall, thickness, negative electrode, silicon

### C. DOCUMENTS CONSIDERED TO BE RELEVANT

| Category* | Citation of document, with indication, where appropriate, of the relevant passages | Relevant to claim No. |
| --- | --- | --- |
| X | CN 217768544 U (CONTEMPORARY AMPEREX TECHNOLOGY CO., LTD.) 08 November 2022 (2022-11-08)<br>    description, paragraphs 59-60, 66, 76, and 86-88, and figures 4-6 | 1-3, 6-17 |
| Y | CN 217768544 U (CONTEMPORARY AMPEREX TECHNOLOGY CO., LTD.) 08 November 2022 (2022-11-08)<br>    description, paragraphs 59-60, 66, 76, and 86-88, and figures 4-6 | 4-5 |
| Y | CN 114614069 A (CONTEMPORARY AMPEREX TECHNOLOGY CO., LTD.) 10 June 2022 (2022-06-10)<br>    description, paragraphs 64-65 and 81, and figure 4 | 4-5 |
| A | CN 216720096 U (CONTEMPORARY AMPEREX TECHNOLOGY CO., LTD.) 10 June 2022 (2022-06-10)<br>    entire document | 1-17 |
| A | US 2016293910 A1 (TYVA ENERGIE) 06 October 2016 (2016-10-06)<br>    entire document | 1-17 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 June 2024** | **25 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/135632**

| Patent document cited in search report | | | Publication date (day/month/year) | Patent family member(s) | | | Publication date (day/month/year) |
|---|---|---|---|---|---|---|---|
| CN | 217768544 | U | 08 November 2022 | WO | 2023236218 | A1 | 14 December 2023 |
| CN | 114614069 | A | 10 June 2022 | WO | 2023216425 | A1 | 16 November 2023 |
| CN | 216720096 | U | 10 June 2022 | None | | | |
| US | 2016293910 | A1 | 06 October 2016 | FR | 3011390 | A1 | 03 April 2015 |
| | | | | EP | 3053205 | A1 | 10 August 2016 |
| | | | | WO | 2015044250 | A1 | 02 April 2015 |

Form PCT/ISA/210 (patent family annex) (July 2022)